# EUROPÄISCHE PATENTSCHRIFT

(11) **EP 0 453 648 B1**
(45) Veröffentlichungstag und Bekanntmachung des Hinweises auf die Patenterteilung: **11.08.1993**
(21) Anmeldenummer: 90124022.6
(22) Anmeldetag: 13.12.1990
(51) Int. Cl.: H01M 2/06, H01M 2/04

(54) **Poldurchführung für eine elektrische Akkumulatorenzelle**
Feedthrough for the terminal of an electrical accumulator cell
Traversée de borne pour une cellule d'accumulateur électrique

(30) Priorität: 21.04.1990 DE 9004533 U
(43) Veröffentlichungstag der Anmeldung: 30.10.1991
(73) Patentinhaber: VARTA Batterie Aktiengesellschaft, D-30405 Hannover (DE)
(72) Erfinder: Falk, Klaus Martin, W-5800 Hagen 1 (DE); Schmidt, Hartmut, W-5826 Gevelsberg (DE)
(74) Vertreter: Kaiser, Dieter Ralf, Dipl.-Ing.

(56) Entgegenhaltungen:
- EP-A- 0 297 376
- EP-A- 0 319 741
- WO-A-90/10954
- DE-A- 1 471 760
- DE-C- 588 219
- DE-U- 9 004 533
- FR-A- 978 323
- US-A- 1 376 932
- US-A- 1 519 867
- US-A- 2 926 210

## Beschreibung

Die Erfindung betrifft eine Poldurchführung für eine elektrische Akkumulatorenzelle, insbesondere Bleiakkumulator, deren Gehäusedeckel aus Kunststoff eine Elektrolyteinfüllöffnung sowie tubusförmige Öffnungen mit einer angespritzten Kunststoffauskleidung zum abgedichteten Hindurchführen eines Polschaftes besitzt, wobei das Kunststoffmaterial der Auskleidung weicher als das Gehäusematerial ist.

Poldurchführungen müssen grundsätzlich darauf angelegt sein, daß der Polschaft durch die ihn aufnehmende Öffnung der Gehäusewand sicher fixiert ist und daß ein dichter Abschluß gegen diese Wand -im allgemeinen der Deckel- einen Elektrolytaustritt zuverlässig verhindert.

Nach konventioneller Technik wird bei Bleipolen eine Bleimuffe in den Deckel eingespritzt, ein für den Endpol vorgesehener Bleistab durch die Muffe geführt und darauf die Muffe mit dem Bleistab, z.B. mittels einer von außen angelegten Heizform gemäß DE-PS 23 39 804, thermisch verschweißt. Für eine rationelle Akkumulatorenfertigung sind derartige Arbeitsgänge zeitraubend und aufwendig.

Eine Poldurchführung gemäß DE-B 27 57 568 zeigt daher einen Polschaft, der einen angespritzte Kunststoffummantelung mit Dichtlippen besitzt und über diese in einem reibschlüssig dichtenden Kontakt zu der zylindrischen Innenwand eines Deckeltubus steht. Eine solche Poldurchführung läßt auch eine gewisse Verschiebbarkeit des Pols in axialer Richtung ohne Dichtigkeitsverlust zu.

Die beiden US-A 15 19 867 und US-A 1 376 932 offenbaren einen anderen Typ einer Poldurchführung, bei dem der Deckeltubus nicht zylindrisch ausgebildet ist, sondern sich von unten nach oben im Durchmesser verjüngt und der hindurchgehende Polschaft in Anpassung an die konische Mantelfläche dieses Tubus zumindest im Durchführungsbereich als Kegelstumpf gestaltet ist.

Schließlich läßt sich der EP-A-297 376 ein Steckdeckel mit tubusförmigen Öffnungen zum Aufnehmen der Bleipole entnehmen. In diesem Falle bildet eine mit Dichtlippen versehene Innenauskleidung der Öffnungen aus einem weichelastischen Material die Dichtung, wobei Reibkontakt zwischen dem nämlichen Kunststoffmaterial und den blanken Polschäften besteht.

Der Erfindung liegt die Aufgabe zugrunde, eine Poldurchführung für eine Akkumulatorenzelle anzugeben, die bei möglichst einfacher technischer Ausführbarkeit eine einwandfreie und lange anhaltende Dichtungsqualität verbürgt. Die Aufgabe wird erfindungsgemäß durch eine Poldurchführung gelöst, wie sie in Patentanspruch 1 definiert ist.

Die Poldurchführung ist demnach so gestaltet, daß die tubusförmige Durchtrittsöffnung für den Polschaft im Gehäusedeckel abweichend von ihrer üblichen zylindrischen Form leicht konisch, mit dem kleineren Öffnungsdurchmesser am oberen und dem größeren Öffnungsdurchmesser am unteren Ende des Tubus, ausgebildet ist und daß mit dieser Öffnung ein Abschnitt des Polschaftes korrespondiert, der die Form eines sich von unten nach oben verjüngenden Kegelstumpfes oder Konus besitzt. Ein solcher Abschnitt bildet zweckmäßig den Übergang zwischen zwei Polschultern. Dabei stützt sich der Deckeltubus mit seiner abdichtenden Kunststoffauskleidung auf die untere Polschulter auf.

Indem der nach unten konisch aufgeweitete Deckeltubus und der Polschaft mit seinem konisch verjüngten Abschnitt paßgenau ineinandergefügt sind, definieren die Mantelfläche der tubusförmigen Öffnung und die gegenüberliegende Umfangsfläche des Polschaftes gemeinsam eine konische bzw. kegelförmige Dichtfläche, welche sich bereits bei geringem Preßaufwand durch eine wesentlich höhere Dichtungsqualität auszeichnet als Dichtungsflächen von zylindrischer Form. Zugleich ist mit der Verzahnung konischer Elemente im Preßsitz ein Selbsthalteeffekt verbunden.

Die Abweichung der Konusflächen von der zylindrischen Form ist erfindungsgemäß gering; ihre Neigung gegen die Senkrechte beträgt ca. 1,5 °.

In dem erwähnten Vorteil des Selbsthalteeffekts bei der erfindungsgemäßen Poldurchführung kommt die Haftwirkung der elastischen Innenauskleidung der Durchführungsöffnung als weiterer Vorteil hinzu, so daß im Ergebnis eine besonders zuverlässige Abdichtung des Polschaftes gegen den Deckel resultiert.

Als Kunststoffmaterial für die Abdichtung ist im Gegensatz zu dem harten, schlagfesten Gehäuse-Kunststoff vorzugsweise ein thermoplastisches Elastomer, z. B. ein Styrol-Butadien-Kautschuk geeignet.

Die erfindungsgemäße Poldurchführung erleichtert auch die Positionierung des Deckels auf dem Gehäusekasten bei der Montage, weil er durch die korrespondierenden Konusflächen von Polschaft und Innentubus eine exakte Führung erhält. Dabei können wahlweise Deckel verwendet werden, die dem Kasten angespritzt bzw. nach dem Spiegelschweißverfahren dicht mit demselben verbunden werden oder die für eine Steckverbindung mit dem Kasten eingerichtet sind. In jedem Fall ist nach der Verdeckelung dank dem Selbsthalteeffekt der erfindungsgemäßen Konizität der Paßflächen zwischen Polschaft und Deckeltubus ein dichter mechanischer Preßsitz gewährleistet.

Zwei Figurendarstellungen sollen den Gegenstand der Erfindung verdeutlichen.

Figur 1 zeigt einen erfindungsgemäß geformten Polschaft.

Figur 2 zeigt eine erfindungsgemäße Poldurchführung.

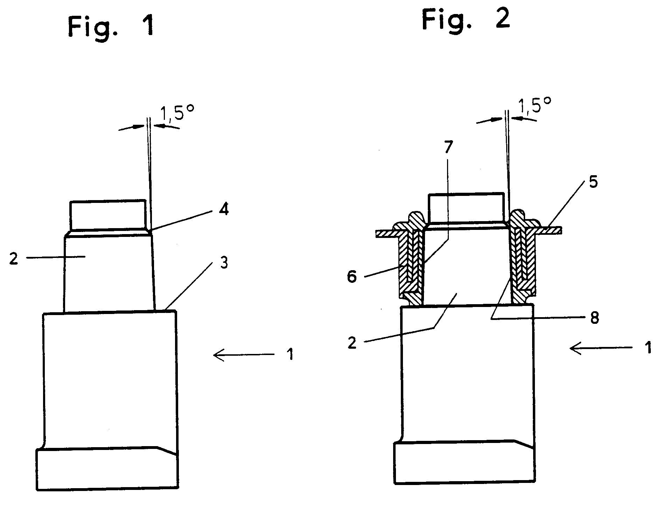

Nach Figur 1 ist ein Polschaft 1 durch stufenweise Reduzierung seines Durchmessers von unten nach oben verjüngt. Dabei besitzt der nach Einbau in die Zelle durch den Deckel sich hindurcherstreckende Abschnitt 2 zwischen den Polschultern 3 und 4 eine leichte konische Abweichung von der Zylinderform, die ca. 1,5 ° beträgt.

In Figur 2 ist auf den Polschaft 1 ein Gehäusedeckel 5 mit einem Innentubus 6, der eine angespritzte weichelastische Kunststoffauskleidung 7 besitzt und dessen Öffnung sich von oben nach unten invers zum Konusabschnitt 2 des Polschaftes konusförmig erweitert, aufgesetzt. Dadurch ergibt sich eine Dichtungsfläche 8 von der Form der Mantelfläche eines Kegelstumpfes. Sie verbirgt einen festen Preßsitz der Teile mit hoher Dichtwirkung.

In einer hier wiedergegebenen besonders günstigen Ausführungsform der Erfindung weist der Innentubus ein U-förmiges Doppelrandpofil auf, dessen nach oben offener Spalt mit dem gleichen Elastomer wie dem der dichtenden Kunststoffauskleidung 7 und im gleichen Spritzgang ausgefüllt werden kann. Der Innentubus schmiegt sich dadurch dem Polschaft mit einer Bewissen Federelastizität an.

## Patentansprüche

1. Poldurchführung für eine elektrische Akkumulatorenzelle, insbesondere Bleiakkumulator, deren Gehäusedeckel (5) aus Kunststoff eine Elektrolyteinfüllöffnung sowie tubusförmige Öffnungen (6) mit einer angespritzten Kuststoffauskleidung (7) zum abgedichteten Hindurchführen eines Polschaftes (1) besitzt, wobei das Kunststoffmaterial der Auskleidung weicher als das Gehäusematerial ist, dadurch gekennzeichnet, daß die Mantelfläche der tubusförmigen Öffnung und zumindest der in den Durchführungsbereich fallende Abschnitt (2) des Polschaftes leicht konisch ausgebildet sind, wobei die Neigung der von der Mantelfläche der tubusförmigen Öffnung und von der gegenüberliegenden Umfangsfläche des Polschaftes definierten konischen Dichtfläche (8) ca. 1,5° gegen die Senkrechte beträgt.

2. Poldurchführung nach Anspruch 1, dadurch gekennzeichnet, daß der Gehäusedeckel mit dem Gehäusekasten verschweißt ist.

3. Poldurchführung nach Anspruch 1, dadurch gekennzeichnet, daß der Gehäusedeckel in dem Gehäusekasten eingesteckt ist.

## Claims

1. Pole insertion means for an electrical accumulator cell, in particular a lead accumulator, whereof the casing cover (5) made of plastics has an electrolyte charging opening and tubular openings (6) with a spray-coated plastics lining (7) for the sealed insertion of a pole rod (1), the plastics material of the lining being softer than the casing material, characterized in that the curved surface of the tubular opening and at least the section (2) of the pole rod which comes into the insertion region are of slightly conical construction, the inclination of the conical sealing surface (8) defined by the curved surface of the tubular opening and by the opposite peripheral surface of the pole rod being approximately 1.5° to the vertical.

2. Pole insertion means according to Claim 1, characterized in that the casing cover is welded to the casing box.

3. Pole insertion means according to Claim 1, characterized in that the casing cover is fitted into the casing box.

## Revendications

1. Traversée de borne pour une cellule d'accumulateur électrique, notamment un accumulateur au plomb dont le couvercle de boîtier (5) en matière synthétique présente une ouverture de remplissage d'électrolyte ainsi que des ouvertures en forme de tube (6) présentant un revêtement en matière synthétique (7) réalisé par injection pour le passage étanche d'une tige de pôle (1), la matière synthétique du revêtement étant plus souple que le matériau du boîtier, caractérisée en ce que la surface de l'ouverture en forme de tube et au mois le tronçon (2) situé dans la zone de passage de la tige de pôle sont réalisés de façon légèrement conique, l'inclinaison de la surface d'étanchéité conique (8) définie par la surface de l'ouverture en forme de tube et la surface de pourtour opposée de la tige de pôle représentant environ 1,5° par rapport à la verticale.

2. Traversée de borne selon la revendication 1, caractérisée en ce que le couvercle de boîtier est soudé à la caisse de boîtier.

3. Traversée de borne selon la revendication 1, caractérisée en ce que le couvercle de boîtier est enfiché dans la caisse de boîtier.
